# EUROPEAN PATENT APPLICATION

(11) **EP 4 343 605 A1**
(43) Date of publication of application: **27.03.2024**
(21) Application number: 23199223.1
(22) Date of filing: 22.09.2023
(51) Int. Cl.: G06F 30/13, G06F 111/04, G06F 111/06

(54) **MULTI-SCALE GENERATIVE DESIGN FOR MODULAR CONSTRUCTION**

(30) Priority: 23.09.2022 US 202263376898 P; 09.02.2023 US 202318167036
(71) Applicant: Autodesk, Inc., San Francisco, CA 94105 (US)
(72) Inventor: STODDART, James, San Francisco (US); DAVIS, Mark Thomas, San Francisco (US); VILLAGGI, Lorenzo, San Francisco (US)
(74) Representative: Morrall, Jonathan Ian McLachlan

(57) **Abstract**

One embodiment of the present invention sets forth a technique for generating a modular design for a construction project. The technique includes executing generating a plurality of design options for the construction project, where each design option includes a site layout and a set of building designs for a set of buildings included in the site layout. The technique also includes computing a first set of performance metrics for the site layout associated with each design option and a second set of performance metrics for the set of building designs associated with each design option, and aggregating the first and second sets of performance metrics into a set of overall performance metrics for each design option. The technique further includes generating a set of candidate designs for the construction project based on the plurality of design options and the overall performance metrics associated with the plurality of design options.

## Description

### CROSS-REFERENCE TO RELATED APPLICATIONS

This application claims the benefit of the U.S. Provisional Application titled "MULTI-SCALE GENERATIVE DESIGN FOR INDUSTRIALIZED CONSTRCTION OF MODULAR HOUSING," filed on September 23, 2022, and having Serial No. 63/376,898. The subject matter of this application is hereby incorporated herein by reference in its entirety.

### BACKGROUND

### Field of the Various Embodiments

Embodiments of the present disclosure relate generally to computer-aided design and generative design technologies and, more specifically, to multi-scale generative design for modular construction.

### Description of the Related Art

Industrialized construction refers to the use of industrialized production techniques, such as mechanization and automation, to streamline the construction of buildings. For example, industrialized construction of a building could involve integrated design and manufacturing workflows, off-site prefabrication or assembly of modular building components, and/or on-site construction automation. Consequently, industrialized construction can lower costs, increase efficiency, and improve construction quality over traditional approaches to construction that involve skilled intensive labor, variable quality, and product and process inefficiencies.

As a general matter, though, construction projects, both traditional and industrial, typically involve multiple discrete stages or scales of design and cascading dependencies across the different stages or scales. For example, a conventional approach to designing for an industrial construction project could involve generating a sequence of designs in descending order of scale. This sequence of designs could begin with determining the envelope of a building, proceed to designing or arranging various interior or exterior components of the building, and end with selecting specific design details for doors, windows, walls, floors, finishes, or other elements. After a design for a given scale is complete, that design is used as the basis for subsequent designs on smaller scales. Continuing with the above example, after the envelope of the building is determined, the envelope could be fixed. Floor plans could then be designed for individual floors of the fixed envelope. After each floor plan is finalized, smaller-scale design details could be selected for elements of that floor plan.

Because designs at a given scale constrain subsequent smaller-scale designs within a construction project, the sequential approach to multi-scale construction design described above typically excludes numerous combinations of designs that could be generated in the absence of such constraints, which ends up limiting the ability to optimize a construction project with respect to an overall set of design goals. For example, a construction project could include goals related to carbon emissions, habitability, cost, and various other factors. While individual stages or scales of design could be performed in ways that consider or optimize for one or more of these factors, cascading dependencies from larger to smaller scales of design could end up preventing the different factors from being adequately evaluated and optimized globally across the different stages of design.

In addition, the extremely large number of possible permutations and combinations of designs in a typical multi-scale construction project usually prevents broad exploration and optimization of the various designs, given the limited computational resources normally available for such tasks. For example, each stage or scale of design in a construction project could include a large number of parameters that could be individually varied to generate an even larger number of designs. When multiple scales of design are simultaneously considered, the prohibitively larger number of possible designs across all scales would make optimizing across multiple design goals or objectives computationally infeasible.

As the foregoing illustrates, what is needed in the art are more effective techniques for generating designs that are optimized across multiple goals or objectives.

### SUMMARY

One embodiment of the present invention sets forth a technique for generating a modular design for a construction project. The technique includes executing one or more geometry optimization systems to generate a first plurality of design options for the construction project, where each design option includes a site layout and a set of building designs for a set of buildings included in the site layout. The technique also includes for each design option included in the first plurality of design options, computing a first set of performance metrics for the site layout associated with the design option and a second set of performance metrics for the set of building designs associated with the design option, and aggregating the first set of performance metrics and the second set of performance metrics into a set of overall performance metrics for the design option. The technique further includes generating a first set of candidate designs for the construction project based on the first plurality of design options and the sets of overall performance metrics associated with the first plurality of design options.

One technical advantage of the disclosed techniques relative to the prior art is that, with the disclosed techniques, multi-scale designs for construction projects can be automatically generated, explored, and optimized in a way that reduces the dependencies between smaller-scale designs and larger-scale designs. Accordingly, designs generated via the disclosed techniques can be optimized more readily across multiple design goals or objectives relative to what can be achieved using conventional multi-scale design approaches that have cascading dependencies between larger-scale designs and smaller-scale designs. Another technical advantage of the disclosed techniques is the use of modular or discrete representations of both space and designs within the space to optimize across multiple scales of a construction project. This feature enables the complex search space associated with multiple scales of designs to be constrained, which allows the design parameters within the search space to be explored and optimized in a computationally feasible manner. These technical advantages provide one or more technological improvements over prior art approaches.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a system configured to implement one or more aspects of various embodiments.
Figure 2 is a more detailed illustration of the design optimization framework of Figure 1, according to various embodiments.
Figure 3 illustrates an exemplar set of components associated with a multiscale generative design, according to various embodiments.
Figure 4 sets forth a flow diagram of method steps for generating a modular design for a construction project, according to various embodiments.
Figure 5 is a more detailed illustration of the site layout generator of Figure 2, according to various embodiments.
Figure 6A illustrates a first step performed by the site layout generator of Figure 2 to generate an exemplar layout of buildings on a site, according to various embodiments.
Figure 6B illustrates a second step performed by the site layout generator of Figure 2 to generate an exemplar layout of buildings on a site, according to various embodiments.
Figure 6C illustrates a third step performed by the site layout generator of Figure 2 to generate an exemplar layout of buildings on a site, according to various embodiments.
Figure 6D illustrates a fourth step performed by the site layout generator of Figure 2 to generate an exemplar layout of buildings on a site, according to various embodiments.
Figure 7 sets forth a flow diagram of method steps for generating a multi-building layout for a site, according to various embodiments.
Figure 8 is a more detailed illustration of the operation of the building layout generator of Figure 2, according to various embodiments.
Figure 9 sets forth a flow diagram of method steps for generating a layout for a building, according to various embodiments.

### DETAILED DESCRIPTION

In the following description, numerous specific details are set forth to provide a more thorough understanding of the various embodiments. However, it will be apparent to one of skill in the art that the inventive concepts may be practiced without one or more of these specific details.

### System Overview

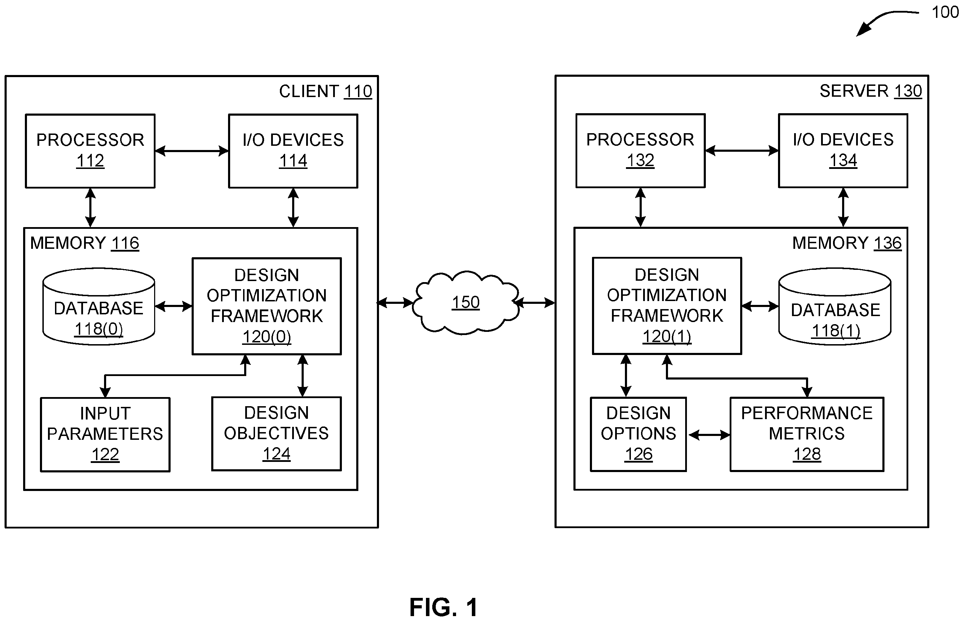

Figure 1 illustrates a system configured to implement one or more aspects of the present embodiments. As shown, a system 100 includes a client computing device 110 coupled to a server computing device 130 via a network 150.

Client computing device 110 includes a processor 112, input/output (I/O) devices 114, and a memory 116, coupled together. Processor 112 includes any technically feasible set of hardware units configured to process data and execute software applications. For example, processor 112 could include one or more of a central processing unit (CPU), a graphics processing unit (GPU), and an application specific integrated circuit (ASICs). I/O devices 114 include any technically feasible set of devices configured to perform input and/or output operations, including, for example, a display device, a keyboard, a mouse, and a touchscreen, among others. Memory 116 includes any technically feasible set of storage media configured to store data and software applications, such as a hard disk, a random-access memory (RAM) module, and a read-only memory (ROM), for example. Memory 116 includes a database 118(0) and a design optimization framework 120(0). Design optimization framework 120(0) is a software application that, when executed by processor 112, interoperates with a corresponding design optimization framework 120(1) executing on server computing device 130, as described in greater detail below.

Server computing device 130 includes a processor 132, I/O devices 134, and memory 136, coupled together. Processor 132 includes any technically feasible set of hardware units configured to process data and execute software applications. I/O devices 134 include any technically feasible set of devices configured to perform input and/or output operations. Memory 136 includes any technically feasible set of storage media configured to store data and software applications. Memory 136 includes a database 118(1) and a design optimization framework 120(1). Design optimization framework 120(1) is a software application that, when executed by processor 132, interoperates with design optimization framework 120(0) to automatically generate design options that address an architectural design problem.

As a general matter, design optimization framework 120(0) and design optimization framework 120(1) interoperate to implement any and all of the inventive functionality described herein and therefore may be considered to represent different portions of single distributed software entity. Thus, for simplicity, design optimization frameworks 120(0) and 120(1) are referred to hereinafter collectively as design optimization framework 120. Similarly, databases 118(0) and 118(1) represent different portions of a single distributed storage entity. Therefore, for simplicity, databases 118(0) and 118(1) may be referred to collectively as database 118.

In one or more embodiments, design optimization framework 120 performs multi-scale generative design for modular construction, in which multiple scales of design for a construction project are optimized both individually and together using modular or discrete representations of space or designs within that space. For example, design optimization framework 120 could be used to generate various combinations of multi-building layouts on a site; allocations of units or other types of interior space to discrete units of space within each building; building facades landscape designs; floorplans; or specific design details associated with doors, windows, walls, roofs, floors, finishes, or other interior or exterior elements of a building.

More specifically, design optimization framework 120(0) receives a set of input parameters 122 and a set of design objectives 124 from a user of client 110. Design optimization framework 120(0) interoperates with design optimization framework 120(1) to generate design options 126 according to input parameters 122 and design objectives 124. Design optimization frameworks 120(0) and 120(1) also evaluate design options 126 with respect to a number of performance metrics 128 that measure the extent to which design objectives 124 are met. Design optimization frameworks 120(0) and 120(1) then iteratively modify and improve design options 126 with respect to performance metrics 128. Design optimization framework 120 is described in further detail below.

### Multi-Scale Generative Design for Modular Construction

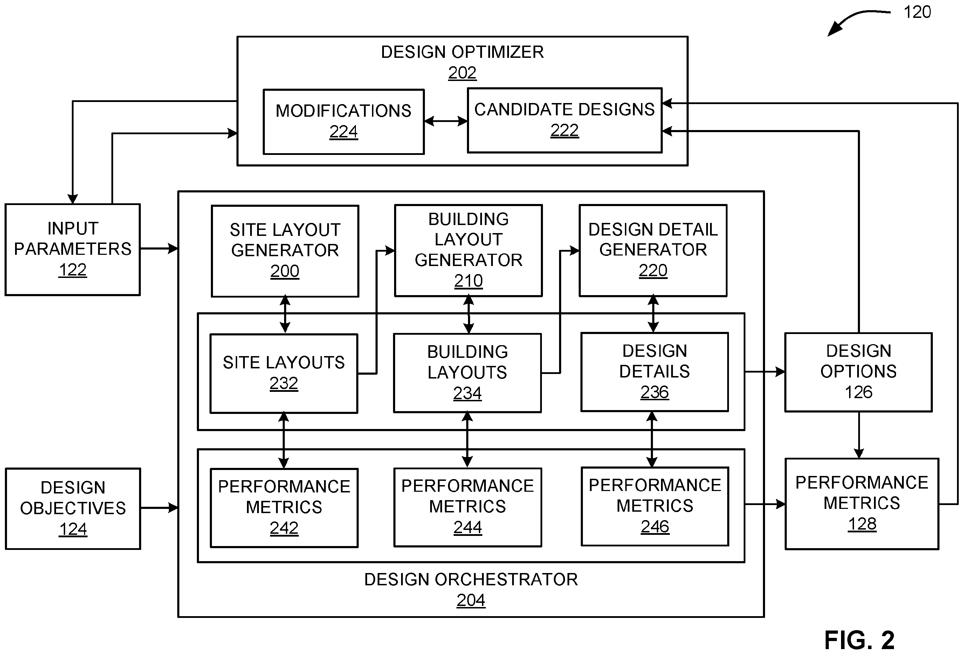

Figure 2 is a more detailed illustration of design optimization framework 120 of Figure 1, according to various embodiments. As mentioned above, design optimization framework 120 receives input parameters 122 and design objectives 124 related to a multi-scale design of a construction project and generates design options 126 based on input parameters 122 and design objectives 124. Design optimization framework 120 also iteratively evaluates and modifies design options 126 based on performance metrics 128 associated with design objectives 124 and selects a subset of design options 126 with performance metrics 128 that best optimize one or more design objectives 124 as candidate designs 222 for the construction project.

As shown in Figure 2, design optimization framework 120 includes a site layout generator 200, a building layout generator 210, a design detail generator 220, a design optimizer 202, and a design orchestrator 204 that operate to iteratively generate, evaluate, and modify design options 126 based on input parameters 122 and design objectives 124. Each of these components is described in further detail below.

Input parameters 122 include user-specified settings related to the multi-scale design. For example, input parameters 122 could include a site boundary and reference geometry for the site on which the construction project is to take place. Input parameters 122 could also, or instead, include requirements or preferences related to individual scales or stages of design within the construction project, as described in further detail below.

Design objectives 124 include attributes to be maximized or minimized in the multi-scale design of the construction project. For example, design objectives 124 could include priorities or preferences related to material cost, manufacturing cost, revenue, views, light levels, ventilation, acoustics, aesthetics, carbon accounting, habitability, diversity in units, outdoor space, privacy, or other attributes. Design objectives 124 can be predefined by design optimization framework 120, specified by a user, or otherwise determined or adjusted.

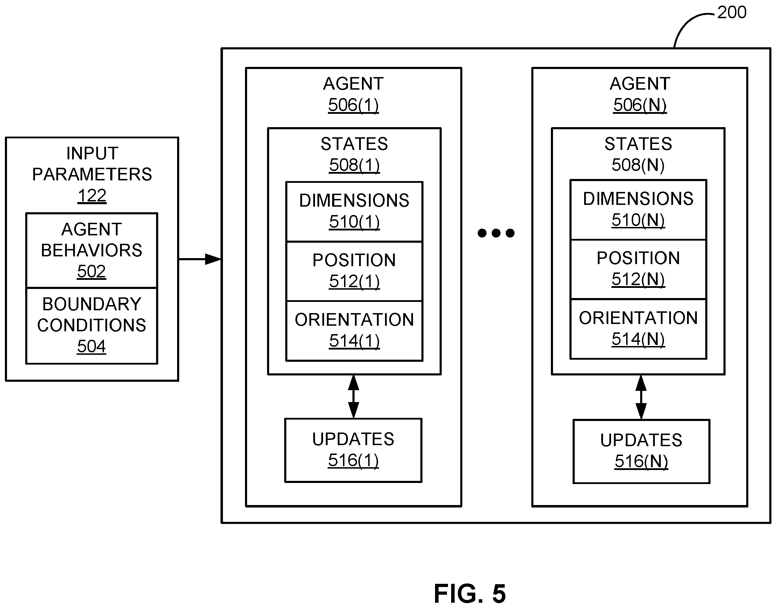

Site layout generator 200, building layout generator 210, and design detail generator 220 correspond to geometry optimization systems that generate designs at different scales or stages associated with the construction project, given rules, constraints, or conditions specified in input parameters 122. Site layout generator 200 generates multiple site layouts 232 for a site associated with a construction project. For example, site layout generator 200 could generate multiple arrangements of buildings on the site, given input parameters 122 that include a boundary of the site, requirements or constraints associated with the layout of buildings on the site, preferences related to alignment or separation between buildings, the number of buildings to place on the site, or other boundary conditions. Each of site layouts 232 can specify footprints, heights, positions, and orientations of multiple buildings on the site. Site layout generator 200 is described in further detail below with respect to Figures 5, 6A-6D, and 7.

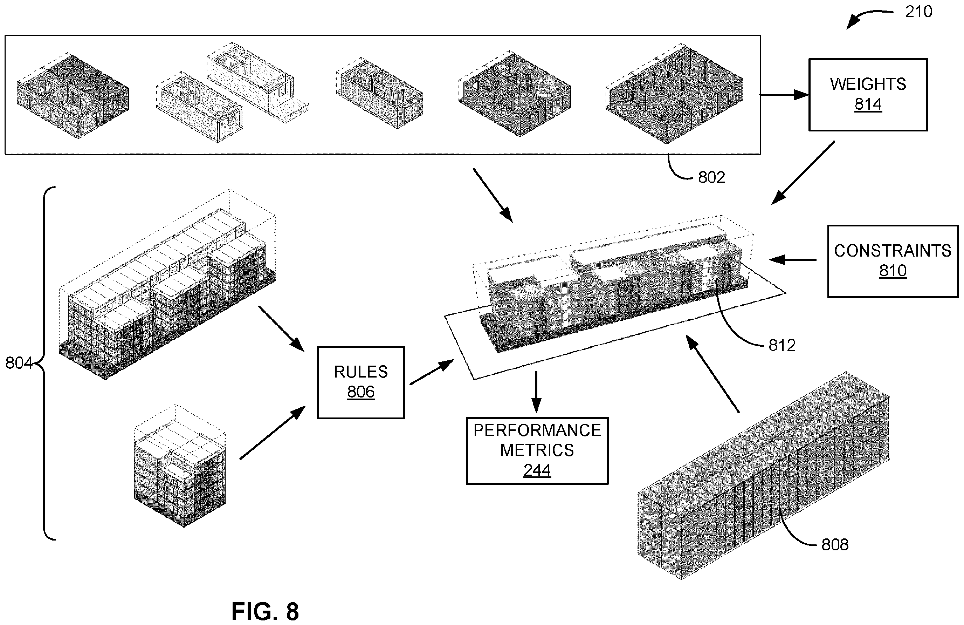

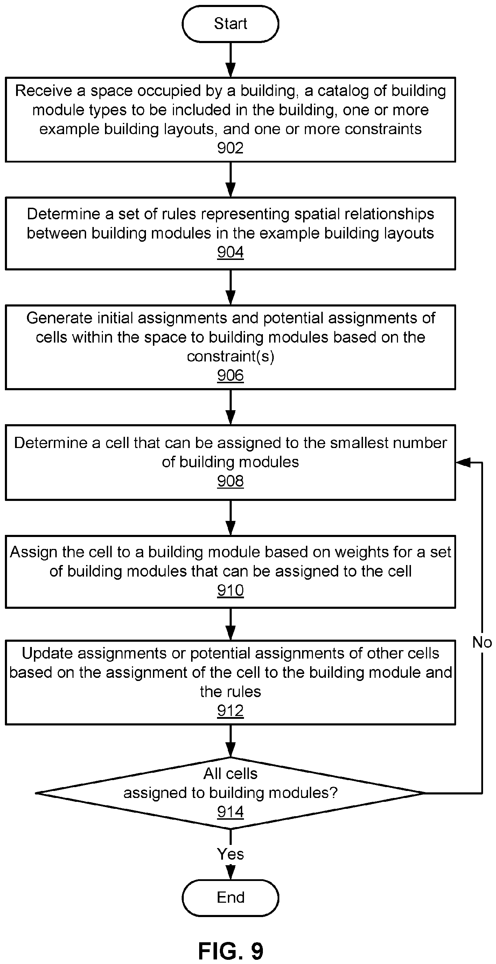

Building layout generator 210 generates building layouts 234 for individual buildings in site layouts 232 produced by site layout generator 200. For example, building layout generator 210 could assign a set of discrete three-dimensional (3D) "cells" within each building to various building modules that represent different types or layouts of interior space or exterior components, such as (but not limited to) living units, offices, commercial space, ground floor space, entryways, parking areas, stairs, elevators, hallways, storage space, facades, roofs, or balconies. These assignments could be performed based on input parameters 122 that include the size or dimensions of a building, a catalog of building modules representing different types of interior space or exterior components to be included in the building, and a set of example building layouts. Building layout generator 210 is described in further detail below with respect to Figures 8 and 9.

Design detail generator 220 receives site layouts 232 generated by site layout generator or building layouts 234 produced by building layout generator 210 and generates additional design details 236 for each site layout or building layout. For example, design detail generator 220 could generate façade designs, landscape designs, tree layouts, apartment layouts, door and window placements, finishes, or other design details 236 for smaller-scale designs that depend on site layouts 232 or building layouts 234.

Design orchestrator 204 coordinates the operation of site layout generator 200, building layout generator 210, and design detail generator 220 in producing site layouts 232, building layouts 234, and design details 236. For example, design orchestrator 204 could determine different subsets of input parameters 122 that are used by site layout generator 200, building layout generator 210, and design detail generator 220 to generate the respective site layouts 232, building layouts 234, and design details 236. These input parameters 122 could include user-specified input parameters 122 that represent preferences or constraints associated with site layouts 232, building layouts 234, or design details 236. These input parameters 122 could also, or instead, include attributes of higher-level or larger scale designs on which a given stage of design depends. Thus, input parameters 122 provided to building layout generator 210 Could include building footprints and heights from site layouts 232 generated by site layout generator 200, and input parameters provided to design detail generator 220 could include portions of site layouts 232 generated by site layout generator 200 or portions of building layouts 234 generated by building layout generator 210.

Design orchestrator 204 computes performance metrics 242, 244, and 246 for individual site layouts 232, building layouts 234, and design details 236, respectively. For example, design orchestrator 204 could determine one or more types of performance metrics 242, 244, or 246 that measure costs, revenue, views, light levels, carbon accounting, habitability, diversity in units, outdoor space, privacy, or other attributes to be optimized in design objectives 124. Design orchestrator 204 could use various types of simulations or models to estimate performance metrics 242, 244, and 246 for the corresponding site layouts 232, building layouts 234, and design details 236, respectively.

Design orchestrator 204 also organizes combinations of site layouts 232, building layouts 234, and design details 236 into different design options 126. Each of design options 126 corresponds to a multi-scale design for the construction project. For example, each design option could include a site layout for the site on which the construction project is to take place, a set of building layouts 234 for buildings on the site layout, and one or more sets of design details 236 associated with the site layout or each building layout.

Design orchestrator 204 aggregates performance metrics 242, 244, and 246 for site layouts 232, building layouts 234, and design details 236, respectively, into overall sets of performance metrics 128 for the corresponding design options 126. For example, design orchestrator 204 could compute a set of performance metrics 128 for each design option as a sum, weighted sum, or another aggregation or combination of performance metrics 242, 244, and 246 for a site layout, a set of building layouts 234, and a set of design details 236 included in that design option. In another example, design orchestrator 204 could use one or more simulations or models to convert performance metrics 242, 244, and 246 for a site layout, a set of building layouts 234, and a set of design details 236 within a given design option into a set of overall performance metrics 128 for that design option.

Design optimizer 202 performs overall optimization of design options 238 that include combinations of site layouts 232, building layouts 234, and design details 236. As mentioned above, this optimization of design options 238 can be performed over multiple iterations by design optimization framework 120. During a first iteration, design optimizer 202 generates input parameters 122 to perform randomized sampling of multidimensional spaces associated with geometry optimization systems that include site layout generator 200, building layout generator 210, and design detail generator 220. Design optimizer 202 also receives, from design orchestrator 204, design options 126 that include site layouts 232, building layouts 234, and design details 236 that are respectively produced by site layout generator 200, building layout generator 210, and design detail generator 220 based on these input parameters 122.

For each set of design options 126, design optimizer 202 identifies a set of candidate designs 222 as one or more design options 126 with performance metrics 128 that best meet one or more design objectives 124. For example, design optimizer 202 could rank design options 126 by individual performance metrics 128 associated with individual design objectives 124. When two or more design options 126 have the same position in the ranking, design optimizer 202 could generate a secondary ranking of these design options 126 by measures of distance between one another within a multidimensional objective space associated with multiple performance metrics 128. Design optimizer 202 could also add a highest-ranked subset of design options 126 in each ranking to the set of candidate designs 222.

In another example, design optimizer 202 could compute an overall score for each design option as a weighted combination of performance metrics 128 for that design option. Weights used in the weighted combination could be specified in design objectives 124 (e.g., by a user or as default weights provided by design optimization framework 120). Design optimizer 202 could generate a single ranking of design options 126 by overall score and select a highest-ranked subset of design options 126 in that ranking as the set of candidate designs 222.

Design optimizer 202 also generates modifications 224 to candidate designs 222. For example, design optimizer 202 could perform random modifications 224 that convert candidate designs 222 into a new "generation" of potential design options 126. These modifications 224 could include "crossover" modifications 224 that exchange attributes of two candidate designs 222. These modifications 224 could also, or instead, include "mutation" modifications 224 that randomly alter one or more attributes of a given candidate design.

Design optimizer 202 determines performance metrics 128 for modifications 224 to candidate designs 222 and updates the set of candidate designs 222 to include modifications 224 associated with performance metrics 128 that best meet one or more design objectives 124. For example, design optimizer 202 could add a certain number of modifications 224 to the set of candidate designs 222 based on rankings of modifications 224 and candidate designs 222 by various performance metrics 128 or measures of distance associated with performance metrics 128.

Design optimizer 202 additionally generates a new set of input parameters 122 for a subsequent iteration of design optimization framework 120 based on candidate designs 222 and modifications 224 that best meet design objectives 124 or other criteria. Design orchestrator 204 uses these new input parameters 122 to produce a new generation of design options 126 for that iteration.

For example, design optimizer 202 could include attributes of candidate designs 222 or modifications 224 that best meet one or more design objectives 124 within a given iteration in input parameters 122 for a next iteration. Design orchestrator 204 could execute site layout generator 200, building layout generator 210, and design detail generator 220 using these new input parameters 122 to produce a new set of site layouts 232, building layouts 234, and design details 236 for the next iteration. Design orchestrator 204 could also compute new performance metrics 242, 244, and 246 for the new site layouts 232, building layouts 234, and design details 236, respectively, and generate new design options 126 that include these new site layouts 232, building layouts 234, and design details 236. Design orchestrator 204 could aggregate the new performance metrics 242, 244, and 246 into overall performance metrics 128 for the new design options 126. Design optimizer 202 could then select candidate designs 222 for the next iteration and generate modifications 224 to the selected candidate designs 222 based on the new design options 126 and corresponding performance metrics 128.

In one or more embodiments, design optimizer 202 uses an evolutionary or genetic technique to iteratively generate input parameters 122 that are used to generate different sets of design options 126, evaluate design options 126 with respect to performance metrics 128, select candidate designs 222 with performance metrics 128 that best meet one or more design objectives 124 from each set of design options 126, and generate modifications 224 to candidate designs 222. For example, design optimizer 202 could use a nondominated sorted genetic algorithm II (NSGA-II) to generate and optimize different sets of candidate designs 222 across multiple scales of design, multiple design objectives 124, and multiple generations or iterations. After a certain number of generations or iterations, design optimizer 202 could generate one or more rankings of candidate designs 222 by one or more performance metrics 128 and output the ranking(s) to one or more users. The user(s) could review the ranking(s) and candidate designs 222 and identify one or more candidate designs 222 as a basis for further exploration or refinement of a multi-scale design for the construction project. The user(s) could also, or instead, use data analysis techniques to filter candidate designs 222, update the ranking(s) based on additional preferences or priorities, or identify a subset of candidate designs 222 in the ranking(s) that best meet a certain combination, weighting, or ordering of design objectives 124.

In some embodiments, design optimizer 202 executes based on one or more input parameters 122 that are specific to the overall optimization of design options 126 for the construction project. These input parameters 122 include (but are not limited to) specific inputs (e.g., input parameters 122, design objectives 124, etc.) into design orchestrator 204 or specific outputs (e.g., site layouts 232, building layouts 234, design details 236, performance metrics 242, 244, 246, or 128, design options 126, candidate designs 222, modifications 224, attributes of various outputs, etc.) from design orchestrator 204 to be tracked across iterations of design optimization performed by design optimization framework 120. These input parameters 122 can also, or instead, include population sizes, numbers of generations, mutation rates, or other parameters that control the genetic or evolutionary technique used to optimize design options 126. These input parameters 122 can be predefined by design optimization framework 120, specified by a user, or otherwise determined or adjusted.

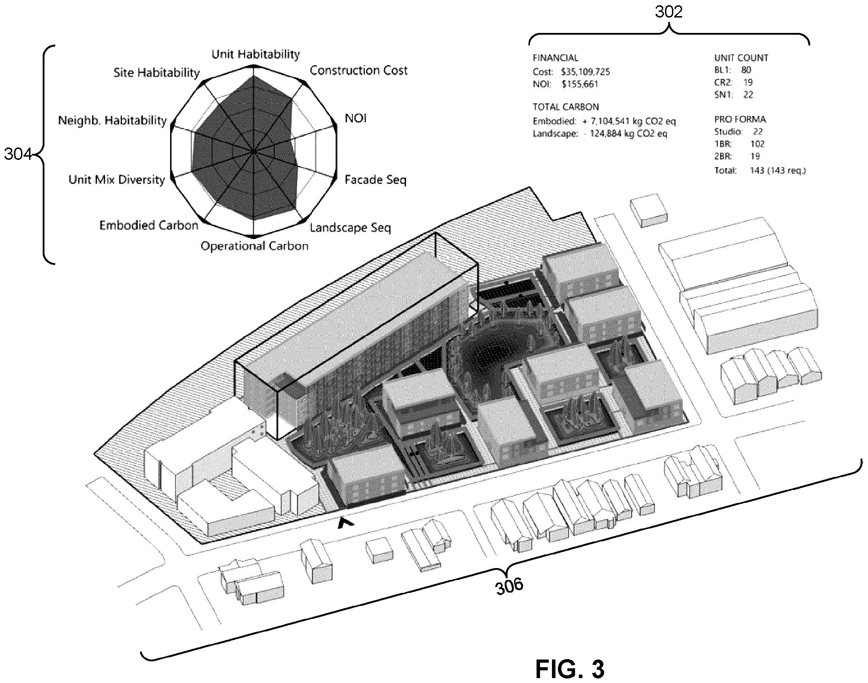

Figure 3 illustrates an exemplar set of components associated with a multiscale generative design, according to various embodiments. As shown in Figure 3, the components include a design option 306 that includes designs at multiple scales and levels of detail for a construction project. For example, design option 306 could include a site layout that specifies footprints, heights, positions, and orientations of a set of buildings on a site associated with the construction project. Design option 306 could also include a building layout for each building in the site layout. Design option 306 could further include design details related to building facades, units, landscaping, or other parts of the construction project that depend on the site layout or building layouts.

The components also include a set of performance metrics 302 associated with design option 306. These performance metrics 302 include financial metrics such as cost or net operating income (NOI). Performance metrics 302 also include counts of units per building and overall counts of different types of units in design option 306. Performance metrics 302 additionally include carbon accounting metrics such as embodied carbon and landscape sequestration. These performance metrics 302 can be computed or estimated by aggregating or combining different sets of performance metrics for different scales of design within the design option.

The components further include a visualization 304 of different design objectives related to design option 306. Visualization 304 includes a spider plot with multiple equally spaced axes representing different design objectives of unit habitability, construction cost, NOI, façade sequestration, landscape sequestration, operational carbon, embodied carbon, unit mix diversity, neighborhood habitability, and site habitability. Visualization 304 also includes shading that indicates the extent to which each design objective is met by design option 306 (e.g., as determined using performance metrics associated with each design objective). As shown in Figure 3, visualization 304 indicates that design option 306 does not meet design objectives related to NOI and façade sequestration well met as other design objectives.

Design option 306, performance metrics 302, and visualization 304 can be presented or outputted to a user involved in the construction project. The user can use specific designs within design option 306, performance metrics 302, and visualization 304 to compare design option 306 with other available design options for the same site or construction project. The user can also use these comparisons to identify one or more design options with performance metrics 302 that best meet one or more design objectives 124 as starting points for further refinement or exploration of designs for the construction project.

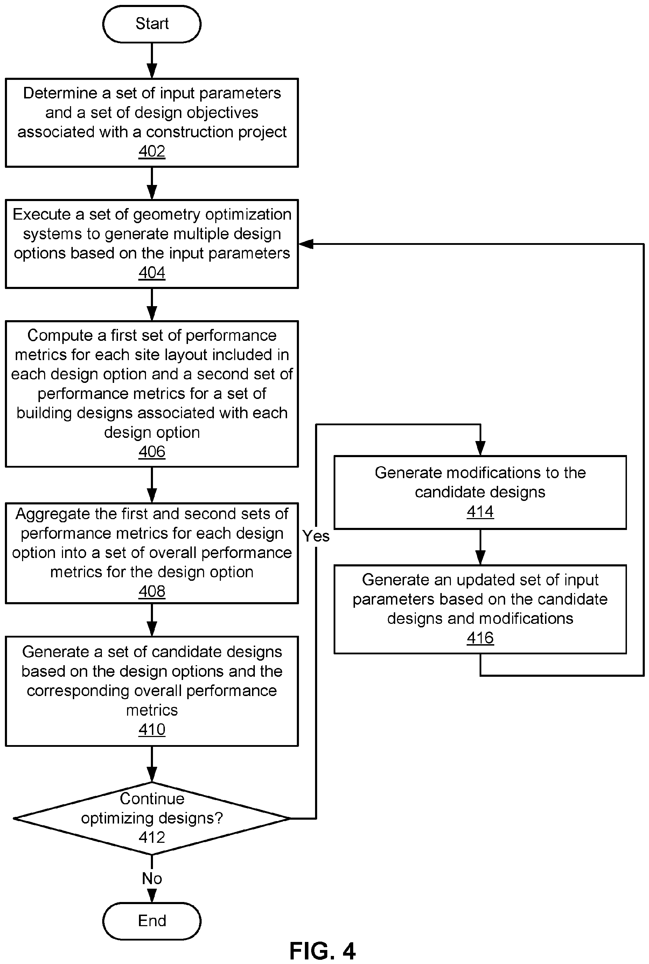

Figure 4 sets forth a flow diagram of method steps for generating a modular design for a construction project, according to various embodiments. Although the method steps are described in conjunction with the systems of Figures 1-2, persons skilled in the art will understand that any system configured to perform the method steps in any order falls within the scope of the present disclosure.

As shown, in step 402, design orchestrator 204 determines a set of input parameters and a set of design objectives associated with a construction project. For example, design orchestrator 204 could receive input parameters that include (but are not limited to) a site boundary for a site associated with the construction project, a set of building modules representing different types of interior space to be included in buildings on the site, one or more example building layouts, a number of buildings to be built on the site, a setback requirement, a separation between buildings, a requirement or preference associated with alignment between buildings or between the buildings and the site, or a minimum or maximum building size. Design orchestrator 204 could also receive design objectives that include (but are not limited to) minimizing or maximizing cost, revenue, habitability, diversity of units or spaces, numbers or densities of units, light levels, privacy, carbon accounting, or other attributes associated with the construction project.

In step 404, design orchestrator 204 executes a set of geometry optimization systems to generate multiple design options based on the input parameters. For example, design orchestrator 204 could execute a site layout generator to generate a set of multi-building site layouts for the site, given input parameters that include (but are not limited to) the site boundary for the site; the number of buildings to build on the site; user-specified or randomized initial positions or orientations of the buildings on the site; requirements or preferences associated with setbacks, separation, or alignment between buildings or between the buildings and the site boundary; or requirements or preferences associated with building sizes or dimensions. Design orchestrator 204 could also, or instead, execute a building layout generator to produce multiple building layouts for a building from one of the site layouts, given input parameters that include (but are not limited to) the footprint and height of the building and one or more example building layouts. Design orchestrator 204 could also, or instead, execute one or more design detail generators to produce façade designs, landscape designs, floor plans, or other types of smaller-scale designs, given input parameters that include portions or elements of site layouts generated by the site layout generator or portions or elements of building layouts generated by the building layout generator. Design orchestrator 204 could further organize the site layouts, building layouts, and smaller-scale designs into different design options for the construction project. Each design option includes multiple scales of design that meet constraints or requirements associated with the construction project.

In step 406, design orchestrator 204 computes a first set of performance metrics for each site layout included in each design option and a second set of performance metrics for a set of building designs associated with each design option. For example, design orchestrator 204 could use one or more models or simulations to estimate performance metrics related to cost, revenue, habitability, diversity of units or spaces, numbers or densities of units, light levels, privacy, carbon accounting, or other attributes to be minimized or maximized in the design objectives for each site layout, building layout, or smaller-scale design produced in step 404.

In step 408, design orchestrator 204 aggregates the first and second sets of performance metrics for each design option into a set of overall performance metrics for the design option. For example, design orchestrator 204 could compute a set of overall performance metrics for a design option as a sum or weighted sum of performance metrics for individual scales of design within the design option. In another example, design orchestrator 204 could use a simulation or model to convert performance metrics for individual scales of design within a design option into a set of overall performance metrics for that design option.

In step 410, design optimizer 202 generates a set of candidate designs based on the design options and the corresponding overall performance metrics. For example, design optimizer 202 could use a genetic or evolutionary technique to select a subset of design options with the best overall performance metrics or diversity in performance metrics as candidate designs.

In step 412, design optimizer 202 determines whether or not to continue optimizing the designs. For example, design optimizer 202 could determine that optimizing the designs is to continue until one or more conditions are met. These condition(s) could include (but are not limited to) a certain number of optimization iterations, convergence of the set of candidate designs to a Pareto-optimal set with respect to the design objectives, or a threshold for a diversity metric associated with the set of candidate designs. Once these conditions(s) are met, design optimizer 202 ends the process of optimizing designs for the construction project.

If optimization of designs for the construction project is to continue, design optimizer 202 proceeds to step 414. In step 414, design optimizer 202 generates modifications to the candidate designs. For example, design optimizer 202 could modify a given candidate design by mutating one or more attributes of the candidate design or exchanging the attribute(s) with one or more attributes of a different candidate design.

In step 416, design optimizer 202 generates an updated set of input parameters based on the candidate designs and modifications. For example, design optimizer 202 could use positions and orientations of buildings from site layouts in the candidate designs or modifications as a new set of input parameters for the site layout generator. Design optimizer 202 could also, or instead, use one or more building layouts in the candidate designs or modifications as a new set of example building layouts for the building layout generator. Design optimizer 202 could also, or instead, use the site layouts and/or building layouts from the candidate designs or modifications as input parameters for one or more design detail generators.

Design optimizer 202 and design orchestrator 204 repeat steps 404-412 using the updated input parameters from step 416 to generate a new set of design options, performance metrics, and candidate designs. Consequently, each round of steps 404-412 performed by design optimizer 202 and design orchestrator 204 corresponds to a different iteration in the optimization of designs for the construction project. If a next iteration is to be performed, design optimizer 202 performs steps 414-416 to modify candidate designs from the most recent iteration and generate updated input parameters into the next iteration. Design optimizer 202 and design orchestrator 204 also repeat steps 404-412 using the updated input parameters to produce new candidate designs. Design optimizer 202 ends the process of optimizing designs for the construction process once one or more conditions are met.

### Agent-Based Optimization of Multi-Building Site Layouts

Figure 5 is a more detailed illustration of site layout generator 200 of Figure 2, according to various embodiments. As mentioned above, site layout generator 200 generates various multi-building site layouts for a site of a construction project, given a set of input parameters 122 that are specified by a user or a design optimization technique (e.g., design optimizer 202 of Figure 2).

In one or more embodiments, site layout generator 200 generates a given site layout using a set of autonomous agents 506(1)-506(1), each of which is referred to individually herein as agent 506. Each agent 506 represents a different building on the site and includes a corresponding set of states 508(1)-(508(N), each of which is referred to individually herein as states 508.

As shown in Figure 5, states 508 for a given agent 506 include a set of dimensions 510(1)-510(N) (each of which is referred to individually herein as dimensions 510), a position 512(1)-512(N) (each of which is referred to individually herein as position 512), and an orientation 514(1)-514(N) (each of which is referred to individually herein as orientation 514). Dimensions 510 include the width, depth, and height of the building represented by the agent. Position 512 includes a location (e.g., a set of coordinates) of the building on the site, and orientation 514 includes an angular position or rotation of the building with respect to a reference frame.

Input parameters 122 into site layout generator 200 include a set of agent behaviors 502 and a set of boundary conditions 504. Agent behaviors 502 include attributes related to the orientation, alignment, and separation of buildings represented by agents 506 with respect to one another or the boundary of the site. For example, agent behaviors 502 could specify (but are not limited to) a separation of a building from the boundary of the site, a separation between buildings, an alignment of a building to the site, an alignment between buildings, or a global orientation across all buildings on the site. Agent behaviors 502 could also, or instead, include user-specified attributes that control the direction, rate, or manner in which states 508 are set or updated by the corresponding agents 506. Each of agent behaviors 502 could be associated with a weight that ranges between 0 and 1. This weight could indicate the relative importance of the corresponding behavior or the magnitude of the corresponding behavior (e.g., the amount of separation, alignment, or global orientation to apply or enforce in the site layout).

Boundary conditions 504 include constraints or requirements associated with site layouts for the site. For example, boundary conditions 504 could include (but are not limited to) a site boundary for the site, setback requirements for the site, a minimum or maximum separation between a buildings, a minimum or maximum building footprint for individual buildings or all buildings, a minimum or maximum building height for individual buildings or all buildings, requirements associated with light levels or privacy for individual buildings or all buildings, the number of buildings to be placed on the site, or an initial position 512 and orientation 514 of each building.

Site layout generator 200 instantiates agents 506 based on agent behaviors 502 and boundary conditions 504. For example, site layout generator 200 sets the initial position 512 and orientation 514 of each agent 506 to values specified in boundary conditions 504 or to random values (e.g., if initial positions 512 and orientations 514 are not included in boundary conditions 504). Site layout generator 200 could also set initial dimensions 510 associated with each agent 506 to a minimum width, depth, or height specified in boundary conditions 504.

Next, site layout generator 200 uses agents 506 to generate iterative updates 516(1)-516(N) (each of which is referred to individually herein as update 516) to states 508 based on agent behaviors 502, boundary conditions 504, and the current values of states 508. More specifically, each agent 506 generates an internal force vector based on spatial and angular relationships with other agents 506, boundary conditions 504 related to these spatial and angular relationships, or agent behaviors 502 related to separation or alignment between buildings or between each building and the boundary of the site. Each agent 506 also uses the force vector to update position 512 and orientation 514 in the corresponding set of states 508. As force vectors are iteratively computed and used to apply updates 516 to states 508, global dampening can be used to gradually reduce the movement of the buildings represented by agents 506.

After the movement of the buildings has been lowered to below a threshold (e.g., due to dampening of the force vectors used to move the buildings), each agent 506 iteratively updates dimensions 510 of the corresponding building based on agent behaviors 502, boundary conditions 504, and the current dimensions 510, position 512, and orientation 514 associated with the building. For example, each agent 506 could iteratively "grow" the building by fixed increments along each dimension (e.g., width, depth, height) until limits related to setbacks, separation between buildings, maximum building sizes, light, ventilation, access, acoustics, or other parameters specified in boundary conditions 504 are reached.

As mentioned above, input parameters 122 can be updated by design optimizer 202 to include attributes of candidate designs 222 or modifications 224 to candidate designs 222 from a previous iteration of design optimization framework 120. In the context of site layout generator 200, these input parameters 122 can include (but are not limited to) initial dimensions 510, positions 512, or orientations 514 associated with agents 506 from candidate designs 222 or from modifications 224 to candidate designs 222. These input parameters 122 can also, or instead, include weights associated with agent behaviors 502 from candidate designs 222 or modifications 224. Given these updated input parameters 122, site layout generator 200 or agents 506 instantiated by site layout generator 200 can generate additional site layouts that further explore the space of potential site layouts or optimize for one or more design objectives 124 associated with the construction project.

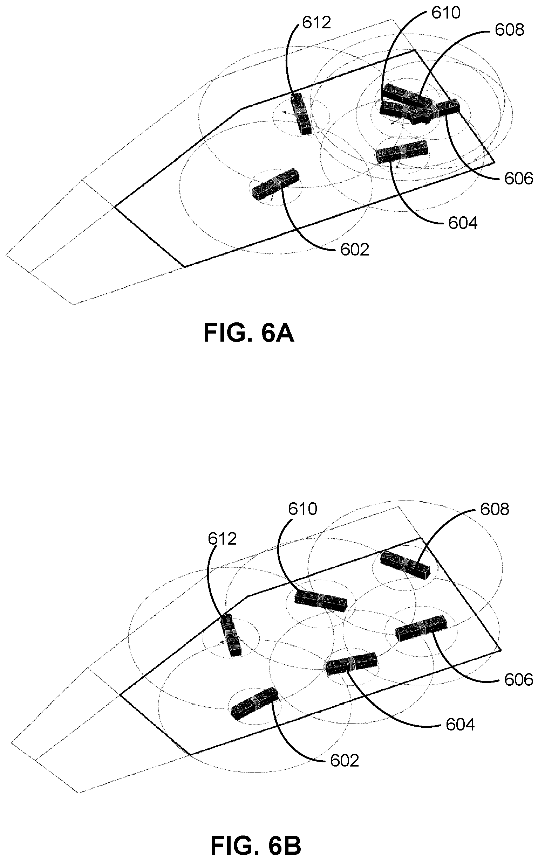

Figure 6A illustrates a first step performed by site layout generator 200 of Figure 2 to generate an exemplar layout of buildings 602-612 on a site, according to various embodiments. More specifically, Figure 6A shows an initial arrangement of six buildings 602-612 on the site. For example, Figure 6A could show the initial positions 512 and orientations 514 of buildings 602-612 on the site after agents 506 representing buildings 602-612 have been instantiated.

As shown in Figure 6A, the initial positions 512 and orientations 514 of three buildings 606-610 cause these buildings 606-610 to overlap, which results in an invalid layout of buildings 602-612 on the site. Over a series of updates 516 to states 508 of agents 506 representing buildings 602-612, positions 512, orientations 514, and dimensions 510 of buildings 602-612 can be updated to generate a valid layout of buildings 602-612 on the site, as described in further detail below with respect to Figures 6B-6D.

Figure 6B illustrates a second step performed by site layout generator 200 of Figure 2 to generate an exemplar layout of buildings 602-612 on a site, according to various embodiments. More specifically, Figure 6B shows a set of final positions 512 of buildings 602-612 on the site after a number of force vectors have been used by a corresponding set of agents 506 to separate buildings 602-612 from one another. For example, Figure 6B could show the configuration of buildings 602-612 on the site after dampening of the force vectors over a certain number of iterative updates 516 causes the movement of buildings 602-612 to fall below a threshold.

As mentioned above, positions 512 of buildings 602-612 can be influenced by agent behaviors 502 and boundary conditions 504. For example, buildings 602-612 could occupy positions 512 in Figure 6B that adhere to requirements or preferences related to setbacks, separation between buildings 602-612, or separation between buildings 602-612 and the boundary of the site.

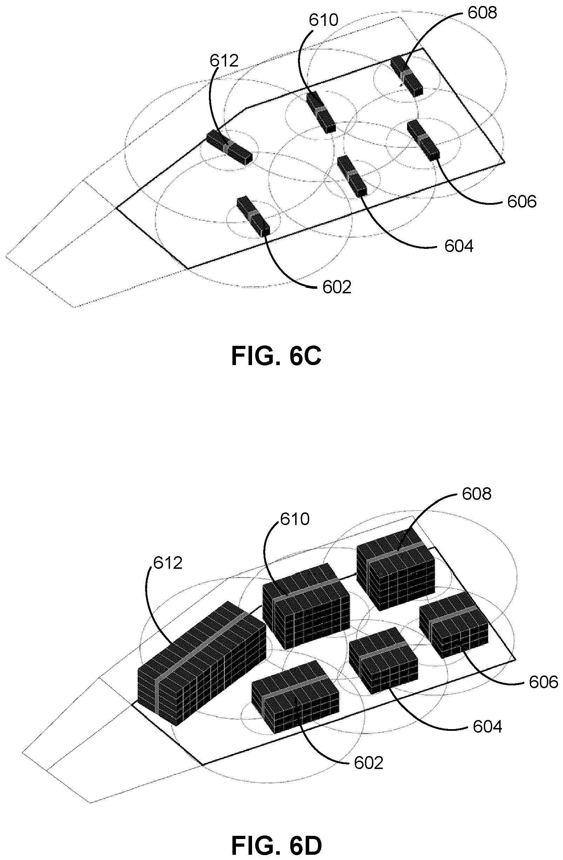

Figure 6C illustrates a third step performed by site layout generator 200 of Figure 2 to generate an exemplar layout of buildings 602-612 on a site, according to various embodiments. In particular, Figure 6C shows a set of final orientations 514 of buildings 602-612 on the site, which are determined based on the final positions 512 of buildings 602-612 in Figure 6B. For example, Figure 6C could show the configuration of buildings 602-612 on the site after a series of rotational adjustments to buildings 602-612 are made by a set of corresponding agents 506. These rotational adjustments could be subject to the same dampening as the force vectors used to separate buildings 602-612.

As with positions 512 of buildings 602-612, orientations 514 of buildings 602-612 can be influenced by agent behaviors 502 and boundary conditions 504. For example, orientations 514 of buildings 602-612 in Figure 6C could adhere to requirements or preferences related to alignment between adjacent buildings 602-612, alignment between each building 602-612 and the boundary of the site, or a global orientation that enforces an overall alignment in orientations 514 across buildings 602-612 on the site.

Figure 6D illustrates a fourth step performed by site layout generator 200 of Figure 2 to generate an exemplar layout of buildings 602-612 on a site, according to various embodiments. In particular, Figure 6D shows a set of final dimensions 510 of buildings 602-612 after final positions 512 and final orientations 514 of buildings 602-612 have been determined. For example, Figure 6D could show the configuration of buildings 602-612 on the site after incremental updates 516 to the width, depth, and height of each building 602-612 have been made by a corresponding agent 506.

Like positions 612 and orientations 514 of buildings 602-612, dimensions 510 of buildings 602-612 can be influenced by agent behaviors 502 or boundary conditions 504. For example, each building 602-612 could be allowed to "grow" in a given direction or dimension until that building reaches a maximum value for that dimension or a maximum overall size, a minimum separation between the building and an adjacent building is reached, a minimum separation between the building and the boundary of the site is reached, or other requirements or constraints that are affected by building size and separation (e.g., light levels, ventilation, acoustics, privacy, etc.) are imposed.

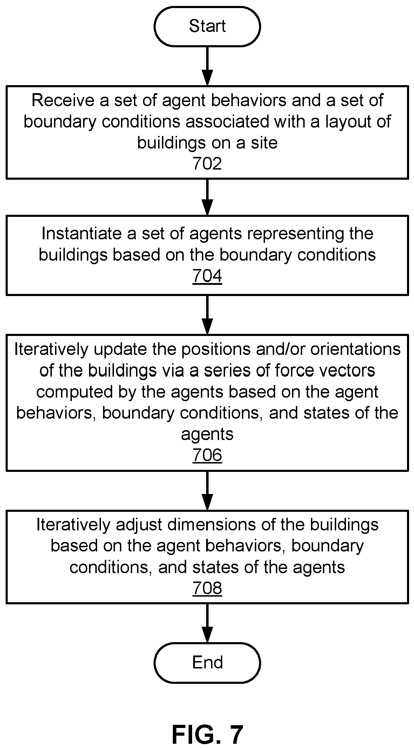

Figure 7 sets forth a flow diagram of method steps for generating a multi-building layout for a site, according to various embodiments. Although the method steps are described in conjunction with the systems of Figures 1-2 and 5, persons skilled in the art will understand that any system configured to perform the method steps in any order falls within the scope of the present disclosure.

As shown, in step 702, site layout generator 200 receives a set of agent behaviors and a set of boundary conditions associated with a layout of buildings on the site. For example, site layout generator 200 could receive agent behaviors 502 that specify attributes related to the orientation, alignment, and separation of the buildings with respect to one another or the boundary of the site. Each agent behavior could be associated with a weight that indicates the relative importance of the corresponding behavior or the magnitude of the corresponding behavior (e.g., the amount of separation, alignment, or global orientation to apply or enforce in the site layout). Site layout generator 200 could also receive boundary conditions that specify a site boundary or setback requirements for the site; a minimum or maximum separation between buildings; a minimum or maximum building dimension or size for individual buildings or all buildings; requirements associated with light levels, ventilation, acoustics or privacy for individual buildings or all buildings; the number of buildings to be placed on the site; an initial position and orientation of each building; or other requirements, constraints, or parameters associated with the layout.

In step 704, site layout generator 200 instantiates a set of agents representing the buildings based on the boundary conditions. For example, site layout generator 200 could initialize the state of each agent to include a position, orientation, or size of a corresponding building. The position, orientation, or size of each building could be initialized to random values or values that are specified in the boundary conditions.

In step 706, site layout generator 200 iteratively updates the positions or orientations of the buildings via a series of force vectors computed by the agents based on the agent behaviors, boundary conditions, and states of the agents. For example, site layout generator 200 could use the agents to update the positions or orientations of the buildings over a certain number of iterations. During each iteration, each agent could compute a force vector for a corresponding building based on spatial and angular relationships with other buildings, boundary conditions related to the spatial and angular relationships, or agent behaviors that control the amount of separation or alignment between buildings or between each building and the boundary of the site. Each agent could also use the force vector to update the position or orientation of the corresponding building. As force vectors are applied to the states of agents over time, global dampening could be used to gradually reduce the movement of the buildings represented by the agents, so that the positions and orientations of the buildings stop changing after a certain number of iterations.

In step 708, site layout generator 200 iteratively adjusts dimensions of the buildings based on the agent behaviors, boundary conditions, and states of the agents. For example, site layout generator 200 could use the agents to iteratively "grow" the corresponding buildings by fixed increments along one or more dimensions. Each agent could increase the width, height, or depth of the corresponding building at a given position and orientation until the size of the building is restricted by requirements or constraints associated with building size, building dimensions, setbacks, separation between buildings, light levels, privacy, ventilation, acoustics, or other attributes specified in the boundary conditions.

Site layout generator 200 can also repeat steps 702-708 to generate multiple layouts of buildings on the site. Each layout can include a different combination of positions, orientations, and dimensions for a set of buildings located on the site. After the layouts are generated, each layout can be used to constrain the generation of building designs (e.g., building layouts or design details) associated with buildings in the layout or optimize a multi-scale design for a construction project that includes the layout, as discussed above.

### Modular Generation and Optimization of Building Designs

Figure 8 is a more detailed illustration of the operation of building layout generator 210 of Figure 2, according to various embodiments. As mentioned above, building layout generator 210 generates a building layout 812 for a building, given input parameters 122 that include an envelope 808 for the building, a catalog 802 of building modules representing different types of interior space to be included in the building, a set of example building layouts 804 for other buildings, or a set of constraints 810.

Envelope 808 includes a width, height, depth, volume, or another indication of the size or dimensions of the building. Envelope 808 is additionally divided into discrete cells representing different portions of space within the building or along the boundary of the building. For example, envelope 808 could be generated by site layout generator 200 as part of a multi-building site layout. As a result, envelope 808 could include cube-or cuboid-shaped cells that represent discrete "increments" of space along one or more dimensions of the building. In another example, envelope 808 could include a non-rectangular shape that is generated by an architect, designer, or a generative design program that produces non-modular building designs. In this example, envelope 808 could be divided into discrete regions corresponding to meshes, polyhedra, curved shapes, irregular shapes, asymmetric shapes, or other types of 3D shapes.

Catalog 802 includes a list of different types of building modules to be added to the building. Each building module represents a certain type of interior space or exterior boundary of the building and includes a certain set of dimensions. For example, catalog 802 could include 3D "tiles" of various shapes and sizes that represent modular designs or layouts of apartment units, offices, common spaces, garages, gyms, basements, entryways, facades, roofs, or other components of a building. Catalog 802 could also, or instead, include empty tiles representing building boundaries or open spaces.

In one or more embodiments, building modules in catalog 802 are associated with different weights 814 that represent the relative frequencies with which the building modules are to be selected for inclusion in building layout 812. For example, each type of building module in catalog 802 could be associated with a default or user-specified numeric weight. As discussed in further detail below, a ratio of weights 814 associated with two or more types of building modules can be used to probabilistically assign cells or sets of cells within envelope 808 to the building modules within building layout 812.

Example building layouts 804 include "desired" arrangements of interior or exterior components within buildings. For example, example building layouts 804 could include fully assembled buildings or portions of buildings that include building modules in catalog 802. One or more example building layouts 804 can be generated by a user as a reference for generating building layout 812. One or more example building layouts 804 can also, or instead, be generated by site layout generator 200 for other buildings or for the same building during previous optimization iterations conducted by design optimization framework 120.

As shown in Figure 8, building layout generator 210 uses example building layouts 804 to determine a set of rules 806 for assigning building modules in catalog 802 to cells in envelope 808. In some embodiments, rules 806 include adjacency relationships or spatial relationships between different types of building modules in example building layouts 804. For example, rules 806 could indicate that certain types of units can be placed next to one another; certain types of units cannot be placed next to one another; certain types of building modules can be placed over the ground floor of the building or below the roof of the building; all units must be adjacent to a hallway or common area; or stairs, plumbing, or exits must be located within a certain distance of each unit.

The numbers, sizes, complexities, or similarities of example building layouts 804 can thus be varied to control the manner in which building layout 812 is generated. For example, a single example building layout could be provided to limit the variation in building layouts produced for a given envelope 808. Alternatively, multiple example building layouts 804 with a greater diversity in building size or arrangements of building modules could be used to generate more diverse building layouts for a given envelope 808.

In one or more embodiments, input parameters 122 also include constraints 810 associated with building layout 812. Constraints 810 include requirements or initial states associated with the assignment of space in building layout 812 to different types of building modules. For example, constraints 810 could include required assignments of specific cells, regions of cells, cell locations (e.g., corners, exterior, lowest level, highest level, etc.), or other portions of envelope 808 to building modules representing stairs, ground floor spaces, basement spaces, garages, hallways, entryways, windows, roofs, facades, or other types of interior space or exterior components. Constraints 810 could additionally specify that these required assignments cannot be changed. In another example, constraints 810 could include initial assignments of the highest cells in envelope 808 to roof modules, the outermost vertical cells in envelope 808 to exterior walls or facades, and the lowest cells in envelope 808 to basement or garage modules. These initial assignments could be removed based on rules 806 and subsequent assignments of other cells within envelope 808 to other building modules, as described in further detail below.

After receiving or determining catalog 802, weights 814, example layouts 804, rules 806, envelope 808, and constraints 810, building layout generator 210 iteratively assigns cells within envelope 808 to building modules in catalog 802 based on weights 814, rules 806, and constraints 810. More specifically, building layout generator 210 uses constraints 810 to generate initial assignments of certain cells in envelope 808 to certain building modules in catalog 802. Building layout generator 210 then populates remaining cells in envelope 808 with additional building modules in catalog 802 in a way that adheres to rules 806 or constraints 810 and reflects weights 814 associated with the building modules.

In one or more embodiments, building layout generator 210 uses a wave function collapse technique to iteratively assign cells within envelope 808 to building modules in catalog 802, after initial assignments are made based on constraints 810. During a given iteration of the wave function collapse technique, building layout generator 210 identifies a cell that can be assigned to the smallest set of building modules in catalog 802. Building layout generator 210 then selects, from the set of building modules that can be assigned to the cell, a building module to assign to the cell (and any adjacent cells required to accommodate the size, shape, or dimensions of the building module). Building layout generator 210 additionally performs this selection in a probabilistic manner based on the relative weights 814 of the set of building modules that can be assigned to the cell. For example, if the cell can be assigned to two different building modules and weights 814 associated with the two building modules have a ratio of 3:1, building layout generator 210 could assign the cell to the first building module with a probability of 0.75 and to the second building module with a probability of 0.25.

After a given cell or set of cells is assigned to a building module, building layout generator 210 updates other unassigned cells in the building with sets of building modules that can be assigned to those cells, given rules 806 that specify adjacency relationships or spatial relationships between those building modules and the building module assigned to the cell or set of cells. When the assignment of a cell to a given building module results in an incompatibility with existing assignments of one or more other cells to one or more other building modules, the assignments of the other cell(s) to the other building module(s) are removed to resolve the incompatibility. Building layout generator 210 thus continues iteratively generating and updating assignments of cells within envelope 808 to different building modules until every cell is assigned to a building module.

As assignments of cells to building modules are made or updated, building layout generator 210 can update performance metrics 244 for building layout 812 to reflect these assignments. For example, building layout generator 210 could estimate costs, carbon accounting metrics, habitability metrics, numbers of units in the building, distributions of units in the building, revenue metrics, or other types of performance metrics 244 after each iteration in which building layout generator 210 generates or updates assignments of one or more cells within envelope 808 to one or more building modules. Consequently, building layout generator 210 could produce a running tally of performance metrics 244 that tracks the assignments of cells within envelope 808 over time.

After all cells within envelope 808 have been assigned to building modules within envelope 808, building layout generator 210 could generate a final set of performance metrics 244 for the corresponding building layout 812 based on the assignments. Building layout generator 210 could also output the final performance metrics 244 with building layout 812, and design optimizer 202 and design orchestrator 204 could use the final performance metrics 244 to compute additional performance metrics 128 for multi-scale designs that incorporate building layout 812 and/or further optimize the multi-scale designs or subsequent building layouts 234 with respect to performance metrics 244 or 128, as discussed above. Building layout generator 210 could also, or instead, output partially complete cell assignments produced by individual iterations of building layout generator 210 along with the corresponding performance metrics 244 to allow design optimizer 202 and design orchestrator 204 to conduct further exploration and optimization of building layouts 234 based on these partial cell assignments.

Because building layout generator 210 operates using input parameters 122 (e.g., catalog 802, weights 814, example layouts 804, envelope 808, constraints 810, etc.) that can be specified via files or user interfaces, building layout generator 210 implements a "no code" technique for generative design of building layouts. Consequently, building layout generator 210 allows exploration and optimization of building layouts to be performed by a wide variety of users. Additionally, because building layout generator 210 assigns cells within envelope 808 to building modules based on rules 806 extracted from example layouts 804, building layout generator 210 allows users to generate a wide variety of building layouts without defining explicit rules for placing or arranging interior or exterior components within buildings.

As mentioned above, input parameters 122 can be updated by design optimizer 202 to include attributes of candidate designs 222 or modifications 224 to candidate designs 222 from a previous iteration of design optimization framework 120. In the context of building layout generator 210, these input parameters 122 can include (but are not limited to) example building layouts 804 or weights 814 from previous iterations of design optimization framework 120. These input parameters 122 can also, or instead, include mutations or modifications to example building layouts 804 or weights 814 from previous iterations of design optimization framework 120. These input parameters 122 can also, or instead, include the addition of building layouts from candidate designs 222 or modifications 224 from previous iterations of design optimization framework 120 to example building layouts 208 that are used to produce subsequent generations of building layouts for a given building envelope 808.

Figure 9 sets forth a flow diagram of method steps for generating a layout for a building, according to various embodiments. Although the method steps are described in conjunction with the systems of Figures 1-2 and 8, persons skilled in the art will understand that any system configured to perform the method steps in any order falls within the scope of the present disclosure.

As shown, in step 902, building layout generator 210 receives a space occupied by a building, a catalog of building module types to be included in the building, one or more example building layouts, and one or more constraints. For example, building layout generator 210 could receive the space occupied by the building as an envelope of the building, a set of dimensions for the building, a 3D model of the building, or another representation of the size and proportions of the building. Building layout generator 210 could also receive a catalog of 3D "tiles" representing different types of living units, office spaces, stairs, garage spaces, basement spaces, or other types of modular interior spaces or exterior components to be included in the layout for the building. Building layout generator 210 could additionally receive example building layouts as full or partial building designs that are produced by a user or a previous iteration of building layout generator 210. Building layout generator 210 could further receive constraints that require certain cells, regions of cells, or cell locations to be initially or permanently assigned to certain types of building modules.

In step 904, building layout generator 210 determines a set of rules representing spatial relationships between building modules in the example building layouts. For example, building layout generator 210 could analyze patterns in the arrangement of building modules in the example building layouts to determine that certain types of building modules are required to be adjacent to, above, or below one another; certain types of building modules are allowed to be adjacent to, above, or below one another; certain types of building modules are not allowed to be adjacent to, above, or below one another; or certain types of building modules must be within a certain distance of one another or more than a certain distance from one another.

In step 906, building layout generator 210 generates initial assignments and potential assignments of cells within the space to building modules based on the constraint(s). For example, building layout generator 210 could generate initial assignments of certain cells to certain building modules to meet the constraint(s). After these assignments are made, building layout generator 210 could determine, for each remaining unassigned cell within the space, a set of building modules to which the cell can be potentially assigned. These potential assignments of remaining cells to different sets of building modules could be determined based on the initial assignments and spatial relationships associated with building modules in the initial assignments, as specified in the rules extracted from the example building layouts.

In step 908, building layout generator 210 determines a cell that can be assigned to the smallest number of building modules. For example, building layout generator 210 could randomly select the cell from a set of cells that can be assigned to the same smallest number of building modules.

In step 910, building layout generator 210 assigns the cell to a building module based on weights for the set of building modules that can be assigned to the cell. For example, building layout generator 210 could compute a ratio of weights for all possible building modules to which the cell can be assigned. Building layout generator 210 could probabilistically assign one of the building modules to the cell based on the ratio, so that building modules with relatively higher weights are selected with higher probability than building modules with relatively lower weights.

In step 912, building layout generator 210 updates assignments or potential assignments of other cells based on the assignment of the cell to the building module and the rules. For example, building layout generator 210 could assign the same building module to one or more neighboring cells to accommodate the shape or size of the tile represented by the building module. Building layout generator 210 could also, or instead, update the sets of building modules to which other cells can potentially be assigned based on spatial relationships associated with the building module assigned to the cell. Building layout generator 210 could also, or instead, remove assignments of one or more neighboring cells to one or more building modules based on an incompatibility between the building module assigned to the cell and the building module(s) assigned to the neighboring cell(s).

In step 914, building layout generator 210 determines whether or not all cells have been assigned to building modules. If all cells in the space occupied by the building have been assigned to building modules, generation of the layout for the building is complete. If one or more cells have not been assigned to building modules, building layout generator 210 repeats steps 908-914 until all cells in the space occupied by the building have been assigned to building modules.

Building layout generator 210 can also repeat steps 902-914 one or more times to generate multiple layouts of the building. Each layout can include a different arrangement of building modules within the space occupied by the building. After the layouts are generated, the layouts can be used to constrain the generation of design details associated with the building or optimize a multi-scale design for a construction project that includes the building, as discussed above.

In sum, the disclosed techniques perform multi-scale generative design for modular construction, in which multiple designs are iteratively generated and optimized for multiple scales of a construction project according to a set of design objectives and a set of input parameters. For example, the disclosed techniques could be used to generate various combinations of multi-building layouts on a site; allocations of space occupied by buildings to interior spaces or exterior components; building facades; landscape designs; floorplans; or specific design details for doors, windows, walls, floors, or finishes. Each design can be generated to meet preferences, constraints, or requirements specified in the input parameters. Each design can also be evaluated with respect to performance metrics that measure the extent to which the design meets one or more design objectives.

More specifically, the disclosed techniques include a design optimization framework that is implemented using a site layout generator, a building layout generator, a design detail generator, a design optimizer, and a design orchestrator. The site layout generator generates multiple site layouts for a site associated with a construction project. For example, the site layout generator could generate multiple arrangements of buildings on the site, given input parameters that include a boundary of the site, requirements or constraints associated with the layout of buildings on the site, preferences related to alignment or separation between buildings, the number of buildings to place on the site, or other boundary conditions. Each site layout specifies dimensions, positions, and orientations for a number of buildings on the site.

The building layout generator receives a size or dimensions for a building and generates one or more building layouts. For example, the building layout generator could assign a set of discrete three-dimensional (3D) "cells" within each building to various building modules that represent different types or layouts of interior space or exterior components, such as (but not limited to) living units, offices, commercial space, ground floor space, entryways, parking areas, stairs, elevators, hallways, storage space, roofs, facades, walls, or windows. These assignments could be performed based on input parameters that include a catalog or list of building modules and a set of example building layouts.

The design detail generator receives components of site layouts generated by the site layout generator or components of building layouts produced by the building layout generator and generates additional design details associated with each site layout or building layout. For example, the design detail generator could generate façade designs, landscape designs, tree layouts, apartment layouts, door and window placements, or other design details that depend on the site or building layouts.

The design orchestrator coordinates the operation of the site layout generator, building layout generator, and design detail generator in producing site layouts, building layouts, and design details for a given iteration of the design optimization framework. For example, the design orchestrator could determine different subsets of input parameters that are used by the site layout generator, building layout generator, and design detail generator to generate the respective site layouts, building layouts, and design details. The design orchestrator could also use various simulations or models to compute costs, revenue, views, light levels, carbon accounting, habitability, diversity in units, outdoor space, privacy, or other performance metrics to be optimized for individual site layouts, building layouts, and design details.

The design orchestrator organizes combinations of site layouts, building layouts for buildings within each site layout, and design details for individual site layouts or building layouts into individual design options corresponding to different multi-scale designs for the construction project. For example, each design option could include a site layout for the site on which the construction project is to take place, a set of building layouts for buildings in the site layout, and one or more sets of design details for the site layout or each building layout. The design orchestrator additionally aggregates performance metrics for the site layouts, building layouts, and design details into overall sets of performance metrics for the corresponding design options.

The design optimizer performs overall optimization of design options that include combinations of site layouts, building layouts, and design details over a series of iterations. For example, the design optimizer could use a genetic or evolutionary technique to identify a set of candidate designs as one or more design options with performance metrics that best meet one or more design objectives. The design optimizer generates modifications to the candidate designs and generates updated input parameters that include attributes of the candidate designs or modifications. The design optimizer starts a new iteration by providing these updated input parameters to the design orchestrator and receives a new "generation" of design options and corresponding performance metrics as the output of the design orchestrator for that iteration. Over multiple iterations, the design optimizer is able to explore and optimize different sets of candidate designs across multiple scales of design and multiple design objectives.

After a certain number of generations or iterations, design optimizer can generate one or more rankings of candidate designs by one or more performance metrics and output the ranking(s) to one or more users. The user(s) could review the ranking(s) and candidate designs and identify one or more candidate designs that can be used as a basis for further design or exploration. The user(s) could also, or instead, use data analysis techniques to filter candidate designs, update the ranking(s) based on additional preferences or priorities, or identify a subset of candidate designs in the ranking(s) that best meet a certain combination or ordering of design objectives.

One technical advantage of the disclosed techniques relative to the prior art is that, with the disclosed techniques, multi-scale designs for construction projects can be automatically generated, explored, and optimized in a way that reduces the dependencies between smaller-scale designs and larger-scale designs. Accordingly, designs generated via the disclosed techniques can be optimized more readily across multiple design goals or objectives relative to what can be achieved using conventional multi-scale design approaches that have cascading dependencies between larger-scale designs and smaller-scale designs. Another technical advantage of the disclosed techniques is the use of modular or discrete representations of both space and designs within the space to optimize across multiple scales of a construction project. This feature enables the complex search space associated with multiple scales of designs to be constrained, which allows the design parameters within the search space to be explored and optimized in a computationally feasible manner. These technical advantages provide one or more technological improvements over prior art approaches.
1. In some embodiments, computer-implemented method for generating a modular design for a construction project comprises executing one or more geometry optimization systems to generate a first plurality of design options for the construction project, wherein each design option included in the first plurality of design options comprises a site layout and a set of building designs for a set of buildings included in the site layout; for each design option included in the first plurality of design options, computing a first set of performance metrics for the site layout associated with the design option and a second set of performance metrics for the set of building designs associated with the design option, and aggregating the first set of performance metrics and the second set of performance metrics into a set of overall performance metrics for the design option; and generating a first set of candidate designs for the construction project based on the first plurality of design options and the sets of overall performance metrics associated with the first plurality of design options.
2. The computer-implemented method of clause 1, further comprising generating a second plurality of design options based on one or more modifications to the first set of candidate designs; and generating a second set of candidate designs for the construction project based on the second plurality of design options and at least one additional set of performance metrics associated with the second plurality of design options.
3. The computer-implemented method of any of clauses 1-2, further comprising generating a second plurality of design options by performing at least one of mutating one or more attributes of a candidate design included in the first set of candidate designs; or replacing a first attribute of a first candidate design included in the first set of candidate designs with a second attribute.
4. The computer-implemented method of any of clauses 1-3, further comprising determining a set of attributes associated with the first set of candidate designs and one or more modifications to the first set of candidate designs; and executing the one or more geometry optimization systems to generate a second plurality of design options based on the set of attributes.
5. The computer-implemented method of any of clauses 1-4, wherein executing the one or more geometry optimization systems comprises determining a set of input parameters associated with the construction project; and generating, via the one or more geometry optimization systems, the first plurality of design options based on the set of input parameters.
6. The computer-implemented method of any of clauses 1-5, wherein the set of input parameters includes at least one of a site boundary, a set of building modules, one or more example building layouts, a number of buildings, a setback requirement, a separation between buildings, or a building size.
7. The computer-implemented method of any of clauses 1-6, wherein generating the first set of candidate designs comprises generating a ranking of the first plurality of design options based on the sets of overall performance metrics associated with the first plurality of design options; and selecting the first set of candidate designs based on the ranking.
8. The computer-implemented method of any of clauses 1-7, wherein the first set of performance metrics and the second set of performance metrics are computed based on one or more simulations.
9. The computer-implemented method of any of clauses 1-8, wherein the first set of performance metrics and the second set of performance metrics include at least one of a construction cost, a material cost, an operating income, a carbon accounting metric, or a habitability metric.
10. The computer-implemented method of any of clauses 1-9, wherein each design option included in the first plurality of design options further includes at least one of a façade, a landscape, a unit layout, a tree layout, a window design, a wall design, or a door design.
11. In some embodiments, one or more non-transitory computer-readable media store instructions that, when executed by one or more processors, cause the one or more processors to perform the steps of executing one or more geometry optimization systems to generate a first plurality of design options for a construction project, wherein each design option included in the first plurality of design options comprises a site layout and a set of building designs for a set of buildings included in the site layout; for each design option included in the first plurality of design options, computing a first set of performance metrics for the site layout associated with the design option and a second set of performance metrics for the set of building designs associated with the design option, and aggregating the first set of performance metrics and the second set of performance metrics into a set of overall performance metrics for the design option; and generating a first set of candidate designs for the construction project based on the first plurality of design options and the sets of overall performance metrics associated with the first plurality of design options.
12. The one or more non-transitory computer-readable media of clause 11, wherein the instructions further cause the one or more processors to perform the steps of generating a second plurality of design options based on the first set of candidate designs and one or more modifications to the first set of candidate designs; and generating a second set of candidate designs for the construction project based on the second plurality of design options and additional sets of performance metrics associated with the second plurality of design options.
13. The one or more non-transitory computer-readable media of any of clauses 11-12, wherein the instructions further cause the one or more processors to generate a second plurality of design options by performing at least one of mutating one or more attributes of a candidate design included in the first set of candidate designs; or exchanging a first attribute of a first candidate design included in the first set of candidate designs and a second attribute of a second candidate design included in the second set of candidate designs.
14. The one or more non-transitory computer-readable media of any of clauses 11-13, wherein instructions further cause the one or more processors to perform the steps of determining a set of attributes associated with the first set of candidate designs and one or more modifications to the first set of candidate designs; and executing the one or more geometry optimization systems to generate a second plurality of design options based on the set of attributes.
15. The one or more non-transitory computer-readable media of any of clauses 11-14, wherein executing the one or more geometry optimization systems comprises determining a set of input parameters associated with a geometry optimization system included in the one or more geometry optimization systems; and executing the geometry optimization system to generate a plurality of designs included in the first plurality of design options based on the set of input parameters.
16. The one or more non-transitory computer-readable media of any of clauses 11-15, wherein generating the first set of candidate designs comprises at least one of generating a plurality of rankings of the first plurality of design options based on the sets of overall performance metrics associated with the first plurality of design options; and selecting the first set of candidate designs from the plurality of rankings.
17. The one or more non-transitory computer-readable media of any of clauses 11-16, wherein executing the one or more geometry optimization systems comprises executing a first geometry optimization system to generate a plurality of site layouts for the construction project; and for each site layout included in the plurality of site layouts, executing a second geometry optimization system to generate a set of building layouts for the set of buildings included in the site layout.
18. The one or more non-transitory computer-readable media of any of clauses 11-17, wherein executing the one or more geometry optimization systems further comprises executing a third geometry optimization system to generate a set of design details for at least one of the site layout or a building layout included in the set of building layouts.
19. The one or more non-transitory computer-readable media of any of clauses 11-18, wherein the set of building designs include at least one of a building layout, a façade design, a landscape design, or a floor plan.
20. In some embodiments, a system comprises one or more memories that store instructions and one or more processors that are coupled to the one or more memories and, when executing the instructions, are configured to perform the steps of executing one or more geometry optimization systems to generate a first plurality of design options for a construction project, wherein each design option included in the first plurality of design options comprises a site layout and a set of building designs for a set of buildings included in the site layout; for each design option included in the first plurality of design options, computing a first set of performance metrics for the site layout associated with the design option and a second set of performance metrics for the set of building designs associated with the design option, and aggregating the first set of performance metrics and the second set of performance metrics into a set of overall performance metrics for the design option; and generating a first set of candidate designs for the construction project based on the first plurality of design options and the sets of overall performance metrics associated with the first plurality of design options.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method for generating a modular design for a construction project, the method comprising:
executing one or more geometry optimization systems to generate a first plurality of design options for the construction project, wherein each design option included in the first plurality of design options comprises a site layout and a set of building designs for a set of buildings included in the site layout;
for each design option included in the first plurality of design options:
computing a first set of performance metrics for the site layout associated with the design option and a second set of performance metrics for the set of building designs associated with the design option; and
aggregating the first set of performance metrics and the second set of performance metrics into a set of overall performance metrics for the design option; and
generating a first set of candidate designs for the construction project based on the first plurality of design options and the sets of overall performance metrics associated with the first plurality of design options.

2. The computer-implemented method of claim 1, further comprising:
generating a second plurality of design options based on one or more modifications to the first set of candidate designs; and
generating a second set of candidate designs for the construction project based on the second plurality of design options and at least one additional set of performance metrics associated with the second plurality of design options.

3. The computer-implemented method of claim 1 or 2, further comprising generating a second plurality of design options by performing at least one of:
mutating one or more attributes of a candidate design included in the first set of candidate designs; or
replacing a first attribute of a first candidate design included in the first set of candidate designs with a second attribute.

4. The computer-implemented method of any preceding claim, further comprising:
determining a set of attributes associated with the first set of candidate designs and one or more modifications to the first set of candidate designs; and
executing the one or more geometry optimization systems to generate a second plurality of design options based on the set of attributes.

5. The computer-implemented method of any preceding claim, wherein executing the one or more geometry optimization systems comprises:
determining a set of input parameters associated with the construction project; and
generating, via the one or more geometry optimization systems, the first plurality of design options based on the set of input parameters.

6. The computer-implemented method of claim 5, wherein the set of input parameters includes at least one of a site boundary, a set of building modules, one or more example building layouts, a number of buildings, a setback requirement, a separation between buildings, or a building size.

7. The computer-implemented method of any preceding claim, wherein generating the first set of candidate designs comprises:
generating a ranking of the first plurality of design options based on the sets of overall performance metrics associated with the first plurality of design options; and
selecting the first set of candidate designs based on the ranking.

8. The computer-implemented method of any preceding claim, wherein the first set of performance metrics and the second set of performance metrics are computed based on one or more simulations.

9. The computer-implemented method of any preceding claim, wherein the first set of performance metrics and the second set of performance metrics include at least one of a construction cost, a material cost, an operating income, a carbon accounting metric, or a habitability metric.

10. The computer-implemented method of any preceding claim, wherein each design option included in the first plurality of design options further includes at least one of a façade, a landscape, a unit layout, a tree layout, a window design, a wall design, or a door design.

11. A computer program product comprising instructions that, when executed by one or more processors, cause the one or more processors to perform the steps of any of claims 1 to 10

12. A system, comprising:
one or more memories that store instructions, and
one or more processors that are coupled to the one or more memories and, when executing the instructions, are configured to perform the steps of any of claims 1 to 10.
